Europäisches Patentamt

European Patent Office

Office Européen des brevets

(11) Veröffentlichungsnummer: **0 243 532 B1**

# (12) EUROPÄISCHE PATENTSCHRIFT

(45) Veröffentlichungstag der Patentschrift:
02.01.91 Patentblatt 91/01

(51) Int. Cl.⁵: **D06M 17/00, A41D 27/06**

(21) Anmeldenummer: **86110588.0**

(22) Anmeldetag: **31.07.86**

(54) Aufbügelbarer Einlageverbundstoff.

(30) Priorität: **25.03.86 DE 3610029**

(43) Veröffentlichungstag der Anmeldung:
**04.11.87 Patentblatt 87/45**

(45) Bekanntmachung des Hinweises auf die
Patenterteilung:
**02.01.91 Patentblatt 91/01**

(84) Benannte Vertragsstaaten:
**BE DE FR GB IT NL**

(56) Entgegenhaltungen:
**DE-A- 2 440 217**
**GB-A- 2 024 099**
**US-A- 3 904 455**
**US-A- 4 143 424**

(72) Erfinder: **Jöst, Manfred**
**Beethovenstrasse 8**
**D-6944 Hemsbach (DE)**
Erfinder: **Knoke, Jürgen, Dr.**
**Wintergasse 87**
**D-6940 Weinheim (DE)**
Erfinder: **Yoshida, Zenji**
**348 Imajuku-cho**
**Moriyama Shiga (JP)**
Erfinder: **Ohta, Noburo**
**592-10, Kamihenmi Sowamachi**
**Sashima Ibaraki (JP)**
Erfinder: **Nakanishi, Terumo**
**906-3, Komahane Sowamachi**
**Sashima Ibaraki (JP)**

(73) Patentinhaber: **Firma Carl Freudenberg**
**Höhnerweg 2-4**
**D-6940 Weinheim/Bergstrasse (DE)**

EP 0 243 532 B1

## Beschreibung

Beschreibung

Bei der großflächigen Verarbeitung fixierbarer Einlagestoffe besteht der Vorteil von Vliesstoffen gegenüber Geweben und Gewirken in folgenden Punkten: Gutes Volumen bei leichtem Gewicht, leichte Schneid- und Stanzbarkeit sowie weicher, voller Griff. Für viele Fälle wird die Weichheit, kombiniert mit einer gewissen Formstabilität, für eine erleichterte Verarbeitung gewünscht. Vliesstoffe sind weich, besitzen aber entweder keine Formstabilität, oder eine solche geht nur mit einem relativ harten Griff einher.

Es sind allgemein bereits Vliesstoff/Wirkware-Verbundmaterialien bekannt, wobei die Synthese der Weichheit des ersteren mit der Formstabilität der letzteren von Bedeutung ist.

Für einbügelbare Einlagevliesstoffe hat sich ein solcher Verbund bisher aber als nicht geeignet erwiesen, da spätestens nach der ersten Reinigung wegen der unterschiedlichen Maßänderungen beider Schichten störende Unebenheiten auftraten.

In GB-A-2024 099 ist ein textiles Laminat beschrieben, das eine Trägerschicht aus schwer schmelzendem Gewirke enthält. Dieses ist mit einem niedrig schmelzenden Filz aus schmelzbaren Fasern abgedeckt. Die Fasern des Filzes werden mit einer Flamme vollflächig beaufschlagt, werden dadurch klebefähig und verbinden sich so mit dem Gewirke, dessen Oberflächenbereich sie etwas durchdringen.

Eine Eignung dieses Laminates als einbügelbarer Einlagestoff ist ausgeschlossen, weil aufgrund unterschiedlicher Maßänderungen der beiden Schichten und wegen der vollflächigen Schichtenbindung Blasenbildungen oder Verwerfungen auftreten.

US-A-3 904 455 beschreibt ein Textil-Laminat, wobei ein Gewebe durch ein nicht gewebtes, aus spinnbaren Fasern bestehendes backing verstärkt ist. Die Fasern werden nach dem Ausspinnen aus der Schmelze in noch klebefähigem Zustand auf das Gewebe abgelegt und haften somit auf diesem (spin bonding-Verfahren). Diese Verbindung ist jedoch den hohen mechanischen Beanspruchungen beim Tragen und Reinigen von Kleidungsstücken nicht gewachsen; wird zusätzlich mit dem Kleben verpreßt, so leiden der weiche Griff und die Flexibilität.

Die vorliegende Erfindung hat zur Aufgabe, einen aufbügelbaren Einlageverbundstoff aus mindestens einem fasergebundenen Vliesstoff und einem damit thermisch verbundenen Gewirke anzugeben, der bei weichem, vollem Griff, wie bei Vliesstoffen üblich, zusätzlich die hohe Formstabilität und Elastizität eines Gewirkes aufweist, wobei keine wesentlichen unterschiedlichen Maßänderungen der beiden Schichten beim Waschen und Chemischreinigen auftreten dürfen.

Gelöst wird diese Aufgabe durch einen Einlageverbundstoff, gemäß Anspruch 1.

Bevorzugte Ausgestaltungsformen sind in den Unteransprüchen aufgeführt.

Der erfindungsgemäße Verbundstoff besteht aus einem weichen, fasergebundenen Vliesstoff mit vorwiegend Synthesefasern und einem Gewirke (Kettwirkware), dessen Gewicht 10 bis 40 g/m² beträgt. Der Titer des Gewirkes beläuft sich auf 12 bis 30 dtex bei einer Maschenteilung zwischen 6 bis 12 Stäbchen/cm und 8 bis 26 Reihen/cm. Der Vliesstoff hat dabei ein Flächengewicht von 10 bis 70 g/m². Der Verbund ist an seiner Außenseite mit einem üblichen Schmelzkleber punktförmig beschichtet. Wesentlich sind die ausschließliche Punktverschweißung zwischen Gewirke- und Vliesstoffasern sowie die Maßgabe, daß die Fasern des Vliesstoffes mehrheitlich den gleichen Erweichungsbereich wie die Filamente des Gewirkes haben müssen. Diese Ausgestaltung verhindert das Auftreten von Unebenheiten und Blasen bei unterschiedlicher Maßänderung während einer Chemischreinigung oder des Waschens. Überraschend wurde gefunden, daß ein erfindungsgemäßer Einlageverbundstoff trotz des wegen der thermischen Bindung zwangsläufigen teilweisen Verlustes des Charakters des Gewirkes, bei Erhalt der vliesstofftypischen Weichheit, sehr an Formkraft gewinnt.

Der erfindungsgemäße Verbund zeigt überraschenderweise gegenüber dem reinen Gewirke eine auf fast ein Drittel verminderte Zugfestigkeit in beiden Richtungen, doch ist diese immer noch genügend größer als die des reinen Vliesstoffes. Diese deutlich niedriger liegende Zugfestigkeit ist offenbar die Ursache für die anwendungstechnischen Vorteile.

Wenn die Maßänderungen von einem Oberstoff und einem Einlage-Gewirke nicht genau gleich groß sind - letzteres ist selten der Fall - dann besteht die Gefahr, daß bei einer Chemischreinigung eine Blasenbildung entsteht.

Durch die geringere Festigkeit des erfindungsgemäßen Vliesverbundstoffes - der Vliesstoff entwickelt keine Schrumpfkraft - tritt unabhängig von der Höhe der Differenz der Maßänderungen der beiden Materialien keine Blasenbildung mehr auf. Ferner besitzt dieser Verbundstoff gegenüber einem reinen Einlagevliesstoff gleicher Weichheit eine erhöhte Festigkeit, was bei der Verarbeitung beim Konfektionieren von Vorteil ist. Die erfindungsgemäße Einlage findet daher vor allem für klassische Anzüge der Herrenkonfektion und für Damenoberbekleidung (Kostüme) Verwendung.

Der in der Erfindung eingesetzte Vliesstoff ist von weicher Konsistenz und besteht zweckmäßig aus Nylon 66 oder bevorzugt aus Nylon 6 als Zentralfaser, gegebenenfalls in Abmischung bis zu 49 %' mit anderen Synthesefasern oder auch nativen und/oder Celluloseregeneratfasern. Er hat ein Gewicht von 10 bis 70 g/m², wobei 20 bis 50 g/m² das gebräuchliche Maß darstellen. Höhere Gewichte nehmen dem Vliesstoffverbund erfahrungsgemäß Weichheit und eleganten Griff. Neben Polyamidfasern wurden auch Polyesterfasern oder Polyester/Copolyestergemische als bevorzugte Zentralfasern ermittelt.

Das Gewirke kann ein Kettgewirke aus monofilen oder multifilen Garnen sein. Es können eine Trikot-, Tuch-, Satin-, Samtbindung oder Kombinationen dieser Bindungsarten vorliegen. Das wichtigste Merkmal ist, daß das Filament so aufgebaut ist, daß es beim Faserbindungsprozeß mit den Vliesstofffasern im gleichen Temperaturbereich wie diese verschweißbar ist. Vorteilhaft sind also bei Nylon 6-Vliesstoffen Nylon 6-Gewirke ; ebenfalls vorteilhaft sind Polyesterfasern in der Vliesstoff- und der Gewirkelage. Beide Lagen werden im Punktschweißverfahren miteinander verfestigt. Das Gewirke ist vorzugsweise an der mit Schmelzkleber beschichteten Seite des Vliesstoffes befestigt, wobei diese Seite geglättet ist.

Eine weitere vorteilhafte Ausgestaltung besteht darin, daß das Gewirke zwischen zwei Floren fixiert ist. Möglich, aber weniger wünschenswert, ist es, an der Außenseite eines Vliesstoffes, die der Haftmasse abgewandt ist, das Gewirke anzuordnen, da dann der volle, weiche Griff des Vliesstoffes nicht mehr so sehr dominiert.

Das Verfahren zur Herstellung des erfindungsgemäßen Vliesstoffes und die Auswahl der weiteren Gewirke- und Vliesstoffeigenschaften erfordern die bei der Herstellung von Einlagevliesstoffen notwendigen Kenntnisse und sind daher nicht Gegenstand der Erfindung. Als Vliesstoffe können Längs-, Quer- oder Wirrvliese eingesetzt werden. Bei der Wahl eines Längsvliesstoffes, der in Querrichtung sehr schwache Festigkeiten aufweist, bringt das Gewirke zusätzlich noch eine vorteilhafte Stabilisierung vor allem in dieser Querrichtung, und eine solche Einlage wird großflächiger einsetzbar.

Bevorzugt für einen weichen Griff ist es, punktförmig mittels eines Kalanders mit einer glatten und einer Rasterwalze zu verschweißen. Die Beschichtung des Vliesstoffes mit Schmelzkleber erfolgt dann punktförmig, wobei, vorzugsweise auf der glatten Seite, Copolyamide, Copolyester, Niederdruckpolyethylen oder PVC- Plastisole verwendet werden können. Der Haftmassenauftrag liegt zweckmäßig zwischen 8 und 40 g/m².

Die Erfindung wird nun anhand von nicht einschränkend zu wertenden Beispielen näher erläutert.

Beispiel 1

Kettgewirkauflage

Auf einer Karde wird ein Vlies gekrempelt mit einer Fasermischung aus 100 Gewichts-% Polyamid 6 1,7/40.

Der Faserflor mit einem Gewicht von 25 g/m² wird mittels eines Querlegers auf ein Lattenband abgelegt. Vor der Verfestigung mit einem Kalander wird auf der Oberseite des Faserflors ein Kettgewirke aufgelegt, das aus 100 Gewichts-% Polyamid 6 besteht. Es weist einen Garntiter von 17 dtex auf, besitzt eine Maschenteilung von 9 Stäbchen/cm und 10 Reihen/cm sowie ein Gewicht von 14 g/m².

Das Laminat wird dann mit einem Prägekalander bei 200°C verfestigt, dessen eine Stahlwalze glatt und dessen andere mit einer Gravur versehen ist, wobei pro Quadratzentimeter 64 Punkte bei einem Punktabstand von 1,25 mm vorhanden sind und die Punktdimensionen 0,4 mm x 0,4 mm x 0,61 mm betragen.

Auf die mit der glatten Kalanderwalze verfestigte Seite, welche die Kettgewirkeauflage enthält, werden 16 g/m² einer Schmelzkleberhaftmasse aus einem Terpolyamid Nylon 66 - Nylon 6 - Nylon 12 mit einem Schmelzpunkt um 120°C punktförmig aufgetragen.

Der auf diese Weise hergestellte Einlagevlies-Verbundstoff hat einen weichen, angenehmen Griff mit guter Elastizität und ist sehr beständig beim Waschen und Chemischreinigen. Er zeigt dabei keine Unruhe durch unterschiedliche Maßänderung von Vliesstoff und Gewirke.

Beispiel 2

Kettgewirkezwischenlage

Auf einer Längskrempel wird ein Flor gekrempelt mit einer Fasermischung von 100 Gewichts-% Polyamid 6. Dieser Flor mit einem Gewicht von 8 bis 10 g/m² wird auf ein Lattenband abgelegt. Auf diesen Flor wird ein Kettgewirke gelegt, das aus 100 Gewichts-% Polyamid 6 besteht und ein Gewicht von 14 g/m² hat.

Sein Garntiter beträgt 17 dtex, und es weist eine Maschenteilung von 9 Stäbchen/cm und 10 Reihen/cm auf.

Mittels eines weiteren Längskrempels wird auf dem Kettgewirke ein zweiter Flor, bestehend aus 100 Gewichts-% Polyamid 6 mit einem Gewicht von 15 g/m², aufgelegt.

Der Vliesverbundstoff, in dem das Kettgewirke zwischen den beiden Floren liegt, wird dann mit einem Prägekalander bei 200°C verfestigt, wobei eine der Stahlwalzen glatt und die andere mit einer Gravur versehen ist. Diese besteht aus 64 Punkten/cm² bei einem Punktabstand von 1,25 mm und Punktdimensionen von 0,5 mm x 0,4 mm x 0,61 mm. Die Abzugsgeschwindigkeit beträgt 30 m/min.

Auf die mit der glatten Kalanderwalze verfestigte Seite werden 16 g/m² einer Schmelzkleberhaftmasse aus einem Terpolyamid Nylon 66 - Nylon 6 - Nylon 12 mit einem Schmelzpunkt um 120°C punktförmig aufgetragen.

Die Festigkeiten betragen in N/5cm, gemessen mit der Zugprüfmaschine :
Kettgewirke rein : längs 55, quer 63
Vliesstoff rein :längs 16, quer 2
Verbundstoff nach Beispiel 2 : längs 25, quer 18
Gewebeeinlage : längs196, quer174
Rascheleinlage : längs 66,4, quer 60,5

Der auf diese Weise hergestellte Einlage-Verbundstoff zeigt ebenfalls einen vliesstoffartigen, weichen, angenehmen Griff mit guter Elastizität und enthält nach dem Waschen und Chemischreinigen keinerlei störende Verwerfungen oder Blasen.

## Ansprüche

1. Aufbügelbarer Einlageverbundstoff aus mindestens einem fasergebundenen Vliesstoff mit einem Flächengewicht von 10 - 70 g/m² und aus einem damit thermisch verbundenen Gewirke, das ein Gewicht von 10 - 40 g/m², einen Garntiter von 12 - 30 dtex und einen Garnabstand von 6 bis 12 Stäbchen/cm und 8 bis 26 Reihen/cm besitzt, wobei eine Seite des Verbundstoffes mit Schmelzkleber punktförmig beschichtet ist, der Vliesstoff zu mehr als 50% aus thermisch erweichbaren Fasern besteht, das Gewirke vollständig aus solchen Filamenten aufgebaut ist, deren Erweichungstemperatur im gleichen Bereich liegt wie diejenige der im Vliesstoff mehrheitlich vorhandenen Fasern, und die Vliesstoffasern und die Gewirkefilamente an den Grenzflächen der Schichten des Verbundes miteinander punktverschweißt sind.

2. Einlageverbundstoff nach Anspruch 1, dadurch gekennzeichnet, daß der Vliesstoff zu mehr als 50% und das Gewirke vollständig aus Nylon 6-Fasern besteht.

3. Einlageverbundstoff nach Anspruch 1, dadurch gekennzeichnet, daß der Vliesstoff zu mehr als 50% und das Gewirke vollständig aus Polyesterfasern oder Fasern aus einem Gemisch Polyester/Copolyester bestehen.

4. Einlageverbundstoff nach einem der vorhergehenden Ansprüche, dadurch gekennzeichnet, daß die Vliesstofflage geglättet und auf der geglätteten Seite gewirkeseitig mit den Schmelzkleberpunkten versehen ist.

5. Einlageverbundstoff nach einem der Ansprüche 1 bis 3, dadurch gekennzeichnet, daß das Gewirke zwischen zwei Vliesstofflagen angeordnet ist.

## Claims

1. A press-on interlining composite material formed from at least one fibre-bonded nonwoven having a basis weight of 10-70 g/m² and from a bearded needle fabric thermally bonded thereto, said bearded needle fabric possessing a weight of 10-40 g/m², a yarn count of 12-30 dtex and a yarn spacing to from 6 to 12 wales/cm and from 8 to 26 courses/cm, one side of the composite material having been dotwise coated with a hot-melt adhesive, the nonwoven being composed to more than 50% of thermally softenable fibres, the bearded needle fabric being composed wholly of filaments whose softening temperature is within the same range as that of the majority of fibres present in the nonwoven, and the nonwoven fibres and the bearded needle fabric filaments being spot-welded to one another at the interfaces of the layers of the composite.

2. An interlining composite material according to claim 1, characterized in that the nonwoven is composed to more than 50%, and the bearded needle fabric wholly,of nylon-6 fibres.

3. An interlining composite material according to claim 1, characterized in that the nonwoven is composed to more than 50%, and the bearded needle fabric wholly, of polyester fibres or fibres composed of a polyester/copolyester mixture.

4. An interlining composite material according to any one of the preceding claims, characterized in that the nonwoven layer has been somoothed and has been provided on the smoothed side facing the bearded needle fabric with dots of hot-melt adhesive.

5. An interlining composite material according to any one of claims 1 to 3, characterized in that the bearded needle fabric is situated between two layers of nonwoven.

## Revendications

1. Matière composite pour doublures, que l'on peut appliquer par repassage, constituée par au moins une étoffe nappée liée par des fibres ayant un poids superficiel de 10-70 g/m² et par un tissu à mailles qui lui est thermiquement lié, ayant un poids de 10-40 g/m², un numéro de fil de 12-30 dtex et un écartement de fil de 6 à 12 colonnes/cm et de 8 à 26 rangées/cm ; un côté de la matière composite est enduit en point par point d'une colle à fusion ; l'étoffe nappée est constituée à plus de 50% par des fibres à ramollissement thermique ; le tissu à mailles est constitué complètement par des filaments dont la température de ramollissement se situe dans le même domaine que celle des fibres présentes en majorité dans l'étoffe nappée ; les fibres de l'étoffe nappée et les filaments du tissu à mailles sont soudés l'un à l'autre en point par point aux interfaces des couches du composite.

2. Matière composite pour doublures selon la revendication 1, **caractérisée en ce que** l'étoffe nappée est constituée de plus de 50% de fibres de nylon 6, le tissu à mailles étant constitué complètement par ces fibres.

3. Matière composite pour doublures selon la revendication 1, **caractérisée en ce que** l'étoffe nappée est constituée à plus de 50% par des fibres de polyester ou des fibres constituées d'un mélange de polyester/copolyester, le tissu à mailles en étant constitué complètement.

4. Matière composite pour doublures selon l'une quelconque des revendications précédentes, **caractérisée en ce que** la couche d'étoffe nappée est lissée et est munie des points de colle à fusion du côté du tissu à mailles, sur la face lissée.

5. Matière composite pour doublures selon l'une quelconque des revendications 1 à 3, **caractérisée en ce que** le tissu à mailles est disposé entre deux couches d'étoffe nappée.